# FASCICULE DE BREVET EUROPEEN

(11) **EP 1 290 062 B1**
(45) Date de publication et mention de la délivrance du brevet: **12.10.2011**
(21) Numéro de dépôt: 01934071.0
(22) Date de dépôt: 10.05.2001
(51) Int. Cl.: C08G 65/26, C08G 63/82, C08G 65/12, B01J 31/12

(54) **UTILISATION DE STANNYLENES ET GERMYLENES COMME CATALYSEURS DE POLYMERISATION D'HETEROCYCLES**
VERWENDUNG VON STANNYLENEN UND GERMYLENEN ALS POLYMERISATIONSKATALYSATOREN FÜR HETEROCYCLEN
USE OF STANNYLENES AND GERMYLENES AS POLYMERISATION CATALYSTS FOR HETEROCYCLES

(30) Priorité: 15.05.2000 EP 00401309
(43) Date de publication de la demande: 12.03.2003
(73) Titulaire: IPSEN PHARMA, 92100 Boulogne-Billancourt (FR); Centre National de la Recherche Scientifique - CNRS, 75794 Paris Cedex 16 (FR)
(72) Inventeur: DUMITRESCU, Anca, F-31400 Toulouse (FR); GORNITZKA, Heinz, F-31450 Pompertuzat (FR); MARTIN-VACA, Blanca, F-31400 Toulouse (FR); BOURISSOU, Didier, F-31830 Plaisance du Touch (FR); BERTRAND, Guy, F-31320 Pechbusque (FR); CAZAUX, Jean-Bernard, F-30390 Aramon (FR)
(74) Mandataire: Audonnet, Nathalie
(86) Numéro de dépôt international: PCT/FR2001/001405
(87) Numéro de publication internationale: WO 2001/088014

(56) Documents cités:
- EP-A- 0 612 780
- EP-A- 0 890 575
- WO-A-97/42197
- US-A- 3 839 297
- SHIRO KOBAYASHI ET AL: "A GERMYLENE AND STANNYLENE AS POLYMERIZATION COMONOMER AND INITIATOR" MAKROMOLEKULARE CHEMIE, MACROMOLECULAR SYMPOSIA,CH,HUTHIG UND WEPF VERLAG. BASEL, vol. 54 / 55, 1 février 1992 (1992-02-01), pages 225-231, XP000259313 cité dans la demande
- KRICHELDORF H R ET AL: "POLYLACTONES. 40. NNOPRETZELS BY MACROCYCLIC POLYMERIZATION OF LACTONES VIA A SPIROCYCLIC TIN INITIATOR DERIVED FROM PENTAERYTHRITOL" MACROMOLECULES,US,AMERICAN CHEMICAL SOCIETY. EASTON, vol. 29, no. 27, 30 décembre 1996 (1996-12-30), pages 8689-8695, XP000637112 ISSN: 0024-9297

## Description

La présente invention concerne l'utilisation de stannylènes et germylènes en tant que catalyseurs de polymérisation d'hétérocycles.

Il a été montré que chaque type de catalyseurs utilisés pour les polymérisations ou copolymérisations d'hétérocycles, donne respectivement des polymères ou des copolymères différents, notamment en raison de réactions de redistribution [Jedlinski et coll., Macromolecules, (1990) 191, 2287 ; Munson et coll., Macromolecules, (1996) 29, 8844 ; Montaudo et coll., Macromolecules, (1996) 29, 6461]. Le problème est donc de trouver des systèmes catalytiques nouveaux afin d'obtenir de nouveaux polymères ou copolymères.

D'autre part, les systèmes catalytiques permettant d'obtenir des copolymères séquencés présentent un intérêt particulier. En effet, l'enchaînement des monomères peut, dans ce cas, être contrôlé afin d'obtenir des copolymères spécifiques possédant des propriétés propres. Ceci est particulièrement intéressant pour les copolymères biocompatibles dont la biodégradation est influencée par cet enchaînement

La présente invention a ainsi pour objet l'utilisation de stannylènes et germylènes de formule générale 1 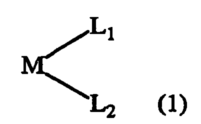 dans laquelle
M représente un atome d'étain ou de germanium ;
L₁ et L₂ représentent, indépendamment, un groupe de formule -E₁₄(R₁₄)(R'₁₄)(R"₁₄), -E₁₅(R₁₅)(R'₁₅) ou -E₁₆(R₁₆)
   EP-A-0 890 575 concerne des composés de formule (1) dans laquelle M représente un élément du groupe 11, 12 ou 14 ; A' et B' représentent, indépendamment, une chaîne carbone, optionnellement substituée ; et L"₁, L"₂ et L'₃ représentent, indépendamment, un groupe de formule -E₁₅(R₁₅)- dans laquelle E₁₅ est un élément du groupe 15 et R₁₅ représente différents groupes variables.
E₁₄ est un élément du groupe 14 ;
E₁₅ est un élément du groupe 15 ;
E₁₆ est un élément du groupe 16 ;
R₁₄, R'₁₄, R"₁₄, R₁₅, R'₁₅ et R₁₆ représentent, indépendamment, l'atome d'hydrogène ; l'un des radicaux substitués (par un ou plusieurs substituants identiques ou différents) ou non-substitués suivants : alkyle, cycloalkyl, ou aryle, dans lesquels ledit substituant est un atome d'halogène, le radical alkyle, cycloalkyle, aryle, nitro ou cyano ; un radical de formule -E'₁₄RR'R" ;
E'₁₄ est un élément du groupe 14 ;
R, R' et R" représentent, indépendamment, l'atome d'hydrogène ou l'un des radicaux substitués (par un ou plusieurs substituants identiques ou différents) ou non-substitués suivants : allyle, cycloalkyle, aryle, dans lesquels ledit substituant est un atome d'halogène, le radical alkyle, aryle, nitro ou cyano ;
comme catalyseurs de polymérisation d'hétérocycles.

Dans les définitions indiquées ci-dessus, l'expression halogène représente un atome de fluor, de chlore, de brome ou d'iode, de préférence chlore. L'expression alkyle représente de préférence un radical alkyle ayant de 1 à 6 atomes de carbone linéaire ou ramifié et en particulier un radical alkyle ayant de 1 à 4 atomes de carbone tels que les radicaux méthyle, éthyle, propyle, isopropyle, butyle, isobutyle, sec-butyle et tert-butyle.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentadiène, cyclohexadiène.

Les radicaux aryles peuvent être de type mono ou polycycliques. Les radicaux aryles monocycliques peuvent être choisis parmi les radicaux phényle optionnellement substitué par un ou plusieurs radicaux alkyle tel que tolyle, xylyle, mésityle, cuményle. Les radicaux aryles polycycliques peuvent être choisis parmi les radicaux naphtyle, anthryle, phénanthryle.

Les composés de formule 1 peuvent se présenter sous forme de monomère ou de dimère, les dimères pouvant adopter une structure linéaire ou cyclique [C. Glidewell Chem. Scripta (1987) 27, 437]. Ainsi, les composés de formule 1 peuvent se présenter, lorsque L₁ et L₂ sont indépendants, sous les formes :

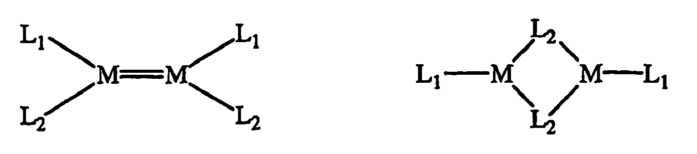

Les composés de formule 1 peuvent comporter une ou plusieurs molécules de solvant [des complexes stannylène-tétrahydrofuranne ont été mis en évidence spectroscopiquement : W. P. Neumann Chem. Rev. (1991) 91, 311]. L'expression solvant représente un hydrocarbure aromatique tel que benzène, toluène ; un dialkyle éther cyclique ou acyclique tels que le diéthyléther, dioxane, tétrahydrofuranne, éthyltertiobutyléther ; un solvant chloré tel que dichlorométhane, chloroforme ; un nitrile aliphatique ou aromatique tels que acétonitrile, benzonitrile ; une cétone aliphatique ou aromatique, cyclique ou acyclique tels que acétone, acétophénone, cyclohexanone ; un dérivé d'acide carboxylique aliphatique ou aromatique, cyclique ou acyclique tels que acétate d'éthyle, diméthylformamide.

L'invention a plus particulièrement pour objet l'utilisation en tant que catalyseurs de polymérisation d'hétérocycles, des produits de formule générale 1 telle que définie ci-dessus, caractérisée en ce que M représente un atome d'étain.

L'invention a plus particulièrement pour objet également l'utilisation en tant que catalyseurs de polymérisation d'hétérocycles, des produits de formule générale 1 telle que définie ci-dessus, caractérisée en ce que L₁ et L₂ représentent, indépendamment, un groupe de formule -E₁₄(R₁₄)(R'₁₄)(R"₁₄), -E₁₅(R₁₅)(R'₁₅) ou -E₁₆(R₁₆).

De préférence, l'utilisation telle que définie ci-dessus d'un composé de formule 1 est telle que
E₁₄ est un atome de carbone ou de silicium ;
E₁₅ est un atome d'azote ou de phosphore ;
E₁₆ est un atome d'oxygène ou de soufre ;
R₁₄, R'₁₄, R"₁₄, R₁₅, R'₁₅ et R₁₆ représentent, indépendamment, l'atome d'hydrogène, un radical alkyle ou un radical de formule -E'₁₄RR'R" ;
E'₁₄ est un atome de carbone ou de silicium ;
R, R' et R" représentent, indépendamment, l'atome d'hydrogène ou un radical alkyle.

De préférence également, l'utilisation telle que définie ci-dessus d'un composé de formule 1 est telle que
L₁ et L₂ représentent, indépendamment, un groupe de formule -E₁₅(R₁₅)(R'₁₅) ou -E₁₆(R₁₆) ;
E₁₅ est un atome d'azote ;
E₁₆ est un atome d'oxygène ;
R₁₅ et R'₁₅ représentent indépendamment un radical alkyle ou de formule -E'₁₄RR'R" ;
R₁₆ représente un radical alkyle ;
E'₁₄ représente un atome de silicium ;
R, R' et R" représentent, indépendamment, l'atome d'hydrogène ou un radical alkyle.

De manière préférentielle, le composé de formule 1 telle que définie ci-dessus, répond à l'une des formules suivantes :
- [(Me₃Si)₂N]₂Sn;
- {[(Me₃Si)₂N]Sn(O*t*-Bu)}₂.

Certains des composés de formule 1 sont des produits connus, c'est-à-dire dont la synthèse et la caractérisation ont été décrites [M. F. Lappert et coll, J. Chem. Soc., Chem. Commun. (1973), 317 ; J. J. Zuckerman et coll, J. Am. Chem. Soc. (1974) 96, 7160 ; M. F. Lappert et coll, J. Chem. Soc., Chem. Commun. (1974) 895 ; M. Veith, Angew. Chem., Int. Ed. Engl. (1975) 14, 263 ; M. F. Lappert et coll, J. Chem. Soc., Dalton Trans (1976), 2268 ; M. F. Lappert et coll, J. Chem. Soc., Dalton Trans. (1977), 2004 ; M. Veith, Z. Naturforsch (1978) 33b, 1 ; *ibid* (1978) 33b, 7 ; M. F. Lappert et coll, J. Chem. Soc., Chem. Commun., (1983) 639 ; *ibid* (1983) 1492 ; *ibid* (1992) 1311 ; M. F. Lappert et coll, J. Am. Chem. Soc, (1980) 102, 2088]. Par conséquent, les nouveaux composés de formule 1 peuvent être préparés par analogie selon les voies de synthèse déjà décrites.

Par ailleurs, certains des composés de formule 1 ont été utilisés en polymérisation d'hétérocycle (thioépoxydes) [S. Kobayashi et coll, Makromol. Chem., Macromol. Symp. (1992) 54/55, 225]. Mais dans ce cas, ils jouent à la fois le rôle de comonomère et d'initiateur de polymérisation (copolymérisations oxydo-réductrices) et sont alors incorporés stoechiométriquement au sein des produits de polymérisation. Ils ne jouent donc pas le rôle de catalyseur.

L'invention concerne l'utilisation des produits de formule 1 telle que définie ci-dessus, en tant que catalyseurs pour la mise en oeuvre de (co)polymérisation d'hétérocycles, c'est à dire de polymérisation ou copolymérisation d'hétérocycles. Lors de la mise en oeuvre de (co)polymérisation, les composés selon l'invention jouent également le rôle d'initiateur ou de régulateur de chaîne, mais ne sont pas incorporés stoechiométriquement au sein des (co)polymères.

Les hétérocycles peuvent contenir un ou plusieurs hétéroatomes des groupes 15 et/ou 16, et posséder une taille allant de trois à huit chaînons. A titre d'exemple d'hétérocycles répondant à la formulation ci-avant, on peut citer les époxydes, les thioépoxydes, les esters ou thioesters cycliques tels que les lactones, les lactames et les anhydrides.

Les composés de formule 1 sont particulièrement intéressants pour la mise en oeuvre de (co)polymérisation des époxydes, notamment de l'oxyde de propène. Les composés de formule 1 sont particulièrement intéressants également pour la mise en oeuvre de (co)polymérisation d'esters cycliques. A titre d'exemple d'esters cycliques, on peut citer les esters cycliques polymères de l'acide lactique et/ou glycolique. Des copolymères statistiques ou séquencés peuvent être obtenus selon que les monomères sont introduits ensemble au début de la réaction, ou séquentiellement au cours de la réaction.

L'invention a également pour objet un procédé de préparation de copolymères, séquencés ou aléatoires, ou de polymères et qui consiste à mettre en présence un ou plusieurs monomères choisis parmi les époxydes et les esters cycliques, un initiateur de chaînes, un catalyseur de polymérisation et éventuellement un solvant de polymérisation, ledit procédé caractérisé en ce que l'initiateur de chaînes et le catalyseur de polymérisation sont représentés par le même composé qui est choisi parmi les composés de formule 1 telle que définie ci-dessus.

La (co)polymérisation peut s'effectuer soit en solution soit en surfusion. Lorsque la (co)polymérisation s'effectue en solution, le solvant de la réaction peut être le (ou l'un des) substrat(s) mis en oeuvre dans la réaction catalytique. Des solvants qui n'interfèrent pas avec la réaction catalytique elle-même, conviennent également. A titre d'exemple de tels solvants, on peut citer les hydrocarbures saturés ou aromatiques, les éthers, les halogénures aliphatiques ou aromatiques.

Les réactions sont conduites à des températures comprises entre la température ambiante et environ 250° C ; la plage de température comprise entre 40 et 200° C s'avère plus avantageuse. Les durées de réaction sont comprises entre quelques minutes et 300 heures, et de préférence entre 5 minutes et 72 heures.

Ce procédé de (co)polymérisation convient particulièrement bien pour l'obtention de (co)polymères d'esters cycliques, notamment les esters cycliques polymères de l'acide lactique et/ou glycolique. Les produits obtenus tels que le copolymère lactique glycolique, biodégradables, sont avantageusement utilisés comme support dans des compositions thérapeutiques à libération prolongée. Le procédé convient particulièrement bien également à la polymérisation des époxydes, notamment de l'oxyde de propène. Les polymères obtenus sont des composés qui peuvent être utilisés pour la synthèse de cristaux liquides organiques ou encore comme membranes semi-perméables.

Le procédé de (co)polymérisation d'hétérocycles selon la présente invention, présente de nombreux avantages, en particulier,
- les catalyseurs de (co)polymérisation sont facilement accessibles et bon marché ;
- la (co)polymérisation peut être véritablement effectuée en milieu homogène de sorte que la distribution de masse des (co)polymères obtenus est étroite ;
- le procédé convient très bien à la préparation de copolymères séquencés ; l'addition successive de monomères permet notamment d'obtenir des copolymères par blocs.

A moins qu'ils ne soient définis d'une autre manière, tous les termes techniques et scientifiques utilisés dans la présente demande, ont la même signification que celle couramment comprise par un spécialiste ordinaire du domaine auquel appartient l'invention.

Les exemples suivants sont présentés pour illustrer les procédures ci-dessus et ne doivent en aucun cas être considérés comme une limite à la portée de l'invention.

### Exemple 1 : Préparation d'un copolymère (D,L-lactide / glycolide) aléatoire ayant une composition lactide / glycolide proche de 75/25

Dans un tube de Schlenk muni d'un barreau aimanté et purgé sous argon, on introduit successivement 0,023 g (0,05 mmol) de [(Me₃Si)₂N]₂Sn, 5,66 g (39,3 mmol) de D,L-lactide, 1,52 g (13,1 mmol) de glycolide et 15 ml de mésitylène. Le mélange réactionnel est laissé sous agitation à 160° C pendant 3 heures. Une analyse par RMN du proton permet de vérifier que la conversion de chacun des monomères (lactide et glycolide) est de 100 %. Le rapport des intégrales des signaux correspondant à la partie polylactide (5,20 ppm) et polyglycolide (4,85 ppm) permet d'évaluer la composition du copolymère à 75 % de lactide et 25 % de glycolide. Selon une analyse par GPC, à l'aide d'un étalonnage réalisé à partir de standards de PS de masses 761 à 400 000, ce copolymère est un mélange de macromolécules (Mw/Mn = 1,67) de masses assez élevées (Mw = 77 500 Dalton).

### Exemple 2 : Préparation d'un copolymère (D,L-lactide / glycolide) aléatoire de masses élevées

Dans un tube de Schlenk muni d'un barreau aimanté et purgé sous argon, on introduit successivement 0,023 g (0,05 mmol) de [(Me₃Si)₂N]₂Sn, 6,03 g (41,9 mmol) de D,L-lactide et 2,08 g (17,9 mmol) de glycolide. Le mélange réactionnel est laissé sous agitation à 140° C pendant 10 minutes. Une analyse par RMN du proton permet de vérifier que la conversion des monomères est de 83 % pour le lactide et de 100 % pour le glycolide. Le rapport des intégrales des signaux correspondant à la partie polylactide (5,20 ppm) et polyglycolide (4,85 ppm) permet d'évaluer la composition du copolymère à 70 % de lactide et 30 % de glycolide. Selon une analyse par GPC, à l'aide d'un étalonnage réalisé à partir de standards de PS de masses 761 à 400 000, ce copolymère est un mélange de macromolécules (Mw/Mn = 1,8) de masses élevées (Mw = 164 700 Dalton).

### Exemple 3 : Préparation d'un copolymère (D,L-lactide / glycolide) aléatoire ayant une composition lactide / glycolide proche de 50/50

Dans un tube de Schlenk muni d'un barreau aimanté et purgé sous argon, on introduit successivement 0,16 g (0,36 mmol) de [(Me₃Si)₂N]₂Sn, 7,87 g (54,7 mmol) de D,L-lactide et 6,34 g (54,7 mmol) de glycolide. Le mélange réactionnel est laissé sous agitation à 180° C pendant 2 heures. Une analyse par RMN du proton permet de vérifier que la conversion de chacun des monomères est de 100 %. Le rapport des intégrales des signaux correspondant à la partie polylactide (5,20 ppm) et polyglycolide (4,85 ppm) permet d'évaluer la composition du copolymère à 50 % de lactide et 50 % de glycolide. Selon une analyse par GPC, à l'aide d'un étalonnage réalisé à partir de standards de PS de masses 761 à 400 000, ce copolymère est un mélange de macromolécules (Mw/Mn =1,7) de masses élevées (Mw = 39 000 Dalton).

### Exemple 4 : Préparation d'un autre copolymère (D,L-lactide / glycolide) aléatoire ayant une composition lactide / glycolide proche de 50/50

Dans un tube de Schlenk muni d'un barreau aimanté et purgé sous argon, on introduit successivement 0,16 g (0,36 mmol) de [(Me₃Si)₂N]₂Sn, 8 g (55 mmol) de D,L-lactide et 6,34 g (55 mmol) de glycolide et 25 ml de mésitylène. Le mélange réactionnel est laissé sous agitation à 180° C pendant 2 heures. Une analyse par RMN du proton permet de vérifier que la conversion des monomères est de 100 % de lactide et de 100 % de glycolide. Le rapport des intégrales des signaux correspondant à la partie polylactide (5,20 ppm) et polyglycolide (4,85 ppm) permet d'évaluer la composition du copolymère à 47 % de lactide et 53 % de glycolide. Selon une analyse par GPC, à l'aide d'un étalonnage réalisé à partir de standards de PS de masses 761 à 400 000, ce copolymère est un mélange de macromolécules (Mw/Mn = 1,5) de masses élevées (Mw = 39 400 Dalton).

### Exemple 5 : Préparation d'un copolymère (D,L-lactide / glycolide) séquencé

Dans un tube de Schlenk muni d'un barreau aimanté et purgé sous argon, on introduit successivement 2,0 g (14 mmol) de D,L-lactide, 7 ml de mésitylène et 41 mg (0,09 mmol) de [(Me₃Si)₂N]₂Sn. Le mélange réactionnel est laissé sous agitation à 180° C pendant 2 heures. Une analyse par RMN du proton permet de vérifier que la conversion du monomère est supérieure à 96 %. Une analyse par GPC, à l'aide d'un étalonnage réalisé à partir de standards de PS de masses 761 à 400 000, montre que le polymère est un mélange de macromolécules ayant des masses voisines (Mw/Mn = 1,76 ; Mw = 18 940 Dalton). A la solution précédente maintenue sous agitation à 180° C sont ajoutés 0,2 g (1,75 mmol) de glycolide. Le mélange réactionnel est laissé sous agitation à 180° C pendant 1 heure. L'analyse d'un aliquot par RMN du proton montre que la conversion du glycolide est totale et qu'un copolymère est formé. Le rapport des intégrales des signaux correspondant à la partie polylactide (5,20 ppm) et polyglycolide (4,85 ppm) est de 7,3/1. L'analyse par GPC indique qu'il y a bien eu allongement des chaînes (Mw/Mn =1,89 ; Mw = 21 560 Dalton).

### Exemple 6 : Préparation d'un copolymère (D,L-lactide / glycolide) aléatoire ayant une composition lactide / glycolide proche de 50/50

Dans un tube de Schlenk muni d'un barreau aimanté et purgé sous argon, on introduit successivement 0,08 g (0,11 mmol) de {[(Me₃Si)₂N]Sn(O*t*-Bu)}₂, 4,9 g (34 mmol) de D,L-lactide et 3,9 g (34 mmol) de glycolide et 25 ml de mésitylène. Le mélange réactionnel est laissé sous agitation à 180° C pendant 2 heures. Une analyse par RMN du proton permet de vérifier que la conversion des monomères est de 100 % de lactide et de 100 % de glycolide. Le rapport des intégrales des signaux correspondant à la partie polylactide (5,20 ppm) et polyglycolide (4,85 ppm) permet d'évaluer la composition du copolymère à 50 % de lactide et 50 % de glycolide. Selon une analyse par GPC, à l'aide d'un étalonnage réalisé à partir de standards de PS de masses 761 à 400 000, ce copolymère est un mélange de macromolécules (Mw/Mn =1,71) de masses élevées (Mw = 33 140 Dalton).

## Revendications

1. Utilisation de stannylènes et germylènes de formule générale 1 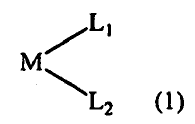 dans laquelle
M représente un atome d'étain ou de germanium ;
L₁ et L₂ représentent, indépendamment, un groupe de formule -E₁₄(R₁₄)(R'₁₄)(R"₁₄), -E₁₅(R₁₅)(R'₁₅) ou -E₁₆(R₁₆) ;
E₁₄ est un élément du groupe 14 ;
E₁₅ est un élément du groupe 15 ;
E₁₆ est un élément du groupe 16 ;
R₁₄, R'₁₄, R"₁₄, R₁₅, R'₁₅ et R₁₆ représentent, indépendamment, l'atome d'hydrogène ; l'un des radicaux substitués ou non-substitués suivants : alkyle, cycloalkyle ou aryle, dans lesquels ledit substituant est un atome d'halogène, le radical alkyle, cycloalkyle, aryle, nitro ou cyano ; un radical de formule -E'₁₄RR'R" ;
E'₁₄ est un élément du groupe 14 ;
R, R' et R" représentent; indépendamment, l'atome d'hydrogène ou l'un des radicaux substitués par un ou plusieurs substituants identiques ou différents ou non-substitués suivants : alkyle, cycloalkyle, aryle, dans lesquels ledit substituant est un atome d'halogène, le radical alkyle, aryle, nitro ou cyano ;
comme catalyseurs de polymérisation d'hétérocycles.

2. Utilisation selon la revendication 1, d'un composé de formule 1 **caractérisée en ce que** M représente un atome d'étain.

3. Utilisation selon l'une des revendications 1 à 2, d'un produit de formule 1 **caractérisée en ce que**
E₁₄ est un atome de carbone ou de silicium ;
E₁₅ est un atome d'azote ou de phosphore ;
E₁₆ est un atome d'oxygène ou de soufre ;
R₁₄, R'₁₄, R"₁₄, R₁₅, R'₁₅ et R₁₆ représentent, indépendamment, l'atome d'hydrogène, un radical alkyle ou un radical de formule -E'₁₄RR'R" ;
E'₁₄ est un atome de carbone ou de silicium ;
R, R' et R" représentent, indépendamment, l'atome d'hydrogène ou un radical alkyle.

4. Utilisation selon l'une des revendications 1 à 3, d'un produit de formule 1 **caractérisée en ce que**
L₁ et L₂ représentent, indépendamment, un groupe de formule -E₁₅(R₁₅)(R'₁₅) ou -E₁₆(R₁₆) ;
E₁₅ est un atome d'azote ;
E₁₆ est un atome d'oxygène ;
R₁₅ et R'₁₅ représentent indépendamment un radical alkyle ou de formule -E'₁₄RR'R" ;
R₁₆ représente un radical alkyle ;
E'₁₄ représente un atome de silicium ;
R, R' et R" représentent, indépendamment, l'atome d'hydrogène ou un radical alkyle.

5. Utilisation selon l'une des revendications 1 à 4, d'un produit de formule 1 **caractérisé en ce qu'**il répond à l'une des formules suivantes :
- [(Me₃Si)₂N]₂Sn ;
- {[(Me₃Si)₂N]Sn(O*t*-Bu)}₂.

6. Utilisation selon l'une des revendications 1 à 5, pour la polymérisation ou copolymérisation d'éthers cycliques, notamment les époxydes tels que l'oxyde de propylène.

7. Utilisation selon l'une des revendications 1 à 5, pour la polymérisation ou copolymérisation d'esters cycliques, notamment les esters cycliques polymères de l'acide lactique et/ou glycolique.

8. Procédé de préparation de copolymères, séquencés ou aléatoires, ou de polymères, et qui consiste à mettre en présence un ou plusieurs monomères choisis parmi les époxydes et les esters cycliques, un catalyseur de polymérisation et éventuellement un solvant de polymérisation, à une température comprise entre la température ambiante et 250° C, pendant une durée comprise entre quelques minutes et 300 heures, ledit procédé **caractérisé en ce que** l'initiateur de chaînes et le catalyseur de polymérisation sont représentés par le même composé de formule générale 1 tel que défini à l'une des revendications 1 à 5.

9. Procédé selon la revendication 8, **caractérisé en ce que** l'époxyde est l'oxyde de propène et les esters cycliques sont les esters cycliques polymères de l'acide lactique et/ou glycolique.

## Claims

1. Use of stannylenes and germylenes of general formula 1 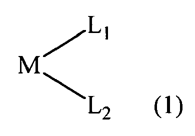 in which
M represents a tin or germanium atom ;
L₁ and L₂ represent, independently, a group of formula -E₁₄(R₁₄)(R'₁₄)(R"₁₄), -E₁₅(R₁₅)(R'₁₅) or -E₁₆(R₁₆) ;
E₁₄ is an element of group 14;
E₁₅ is an element of group 15 ;
E₁₆ is an element of group 16 ;
R₁₄, R'₁₄, R"₁₄, R₁₅, R'₁₅ and R₁₆ represent, independently, the hydrogen atom; one of the following substituted or non-substituted radicals : alkyl, cycloalkyl or aryl, in which said substituent is a halogen atom, the alkyl, cycloalkyl, aryl, nitro or cyano radical ; a radical of formula -E'₁₄RR'R" ;
E'₁₄ is an element of group 14 ;
R, R' and R" represent, independently, the hydrogen atom or one of the following radicals substituted by one or more identical or different substituents or non-substituted : alkyl, cycloalkyl, aryl, in which said substituent is a halogen atom, the alkyl, aryl, nitro or cyano radical ;
as polymerization catalysts of heterocycles.

2. Use according to claim 1, of a compound of formula 1 **characterized in that** M represents an atom of tin.

3. Use according to one of claims 1 to 2, of a product of formula 1 **characterized in that**
E₁₄ is a carbon or silicon atom ;
E₁₅ is a nitrogen or phosphorus atom ;
E₁₆ is an oxygen or sulphur atom ;
R₁₄, R'₁₄, R"₁₄, R₁₅, R'₁₅ and R₁₆ represent, independently, the hydrogen atom, an alkyl radical or a radical of formula -E'₁₄RR'R" ;
E'₁₄ is a carbon or silicon atom ;
R, R' and R" represent, independently, the hydrogen atom or an alkyl radical.

4. Use according to one of claims 1 to 3, of a product of formula 1 **characterized in that**
L₁ and L₂ represent, independently, a group of formula -E₁₅(R₁₅)(R'₁₅) or -E₁₆(R₁₆) ;
E₁₅ is a nitrogen atom ;
E₁₆ is an oxygen atom ;
R₁₅ and R'₁₅ independently represent an alkyl radical or a radical of formula -E'₁₄RR'R" ;
R₁₆ represents an alkyl radical ;
E'₁₄ represents a silicon atom ;
R, R' and R" represent, independently, the hydrogen atom or an alkyl radical.

5. Use according to one of claims 1 to 4, of a product of formula 1 **characterized in that** it corresponds to one of the following formulae :
- [(Me₃Si)₂N]₂Sn ;
- {[(Me₃Si)₂N]Sn(O*t*-Bu)}₂.

6. Use according to one of claims 1 to 5, for the polymerization or copolymerization of cyclic ethers, in particular epoxides such as propylene oxide.

7. Use according to one of claims 1 to 5, for the polymerization or copolymerization of cyclic esters, in particular cyclic ester polymers of lactic and/or glycolic acid.

8. Process for the preparation of block or random copolymers, or polymers, and which consists of introducing one or more monomers chosen from epoxides and cyclic esters, a polymerization catalyst and optionally a polymerization solvent, at a temperature comprised between ambient temperature and 250° C, for a duration comprised between a few minutes and 300 hours, said process **characterized in that** the chain initiator and the polymerization catalyst are represented by the same compound of general formula 1 as defined in one of claims 1 to 5.

9. Process according to claim 8, **characterized in that** the epoxide is propene oxide and the cyclic esters are the cyclic ester polymers of lactic and/or glycolic acid.

## Patentansprüche

1. Verwendung von Stannylenen und Germylenen der allgemeinen Formel (1) 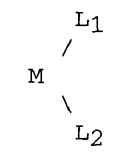 in der
M ein Zinn- oder Germaniumatom darstellt;
L₁ und L₂ unabhängig eine Gruppe der Formel -E₁₄(R₁₄)(R₁₄)(R"₁₄), -E₁₅(R₁₅)(R'₁₅) oder -E₆(R₁₆) darstellen;
E₁₄ ein Element der Gruppe 14 ist;
E₁₅ ein Element der Gruppe 15 ist;
E₁₆ ein Element der Gruppe 16 ist;
R₁₄, R'₁₄, R"₁₄, R₁₅, R'₁₅ und R₁₆ unabhängig ein Wasserstoffatom, einen der folgenden substituierten oder nicht-substituierten Reste: Alkyl, Cycloalkyl oder Aryl, in denen der genannte Substituent ein Halogenatom, der Alkyl-, Cycloalkyl-, Aryl-, Nitro- oder Cyano-Rest ist;
einen Rest der Formel -E'₁₄RR'R" darstellen; E'₁₄ ein Element der Gruppe 14 ist;
R, R' und R" unabhängig ein Wasserstoffatom oder einen der folgenden Reste, substituiert mit einem oder mehreren Substituenten, die identisch oder unterschiedlich sind, oder nicht-substituiert,: Alkyl, Cycloalkyl, Aryl, in denen der genannte Substituent ein Halogenatom, der Alkyl-, Aryl-, Nitro- oder Cyano-Rest ist, darstellen;
als Katalysatoren der Polymerisation von Heterocyclen.

2. Verwendung gemäß Anspruch 1 einer Verbindung der Formel (1), **dadurch gekennzeichnet, daß** M ein Zinnatom darstellt.

3. Verwendung gemäß einem der Ansprüche 1 bis 2 eines Produktes der Formel (1), **dadurch gekennzeichnet, daß**
E₁₄ ein Kohlenstoff- oder Siliciumatom ist;
E₁₅ ein Stickstoff- oder Phosphoratom ist;
E₁₆ ein Sauerstoff- oder Schwefelatom ist;
R₁₄, R'₁₄, R"₁₄, R₁₅, R'₁₅ und R₁₆ unabhängig ein Wasserstoffatom, einen Alkyl-Rest oder einen Rest der Formel -E'₁₄RR'R" darstellen;
E'₁₄ ein Kohlenstoff- oder Siliciumatom ist;
R, R' und R" unabhängig ein Wasserstoffatom oder einen Alkyl-Rest darstellen.

4. Verwendung gemäß einem der Ansprüche 1 bis 3 eines Produktes der Formel (1), **dadurch gekennzeichnet, daß**
L₁ und L₂ unabhängig eine Gruppe der Formel -E₁₅(R₁₅)(R'₁₅) oder -E₁₆ (R₁₆) darstellen;
E₁₅ ein Stickstoffatom ist;
E₁₆ ein Sauerstoffatom ist;
R₁₅ und R'₁₅ unabhängig einen Alkyl-Rest oder einen Rest der Formel -E'₁₄RR'R" darstellen;
R₁₆ einen Alkyl-Rest darstellt;
E'₁₄ ein Siliciumatom darstellt;
R, R' und R" unabhängig ein Wasserstoffatom oder einen Alkyl-Rest darstellen.

5. Verwendung gemäß einem der Ansprüche 1 bis 4 eines Produktes der Formel (1), **dadurch gekennzeichnet, daß** es einer der folgenden Formeln entspricht:
[(Me₃Si)₂N]₂Sn;
{[(Me₃Si)₂N]Sn(Ot-Bu)}₂.

6. Verwendung gemäß einem der Ansprüche 1 bis 5 für die Polymerisation oder Copolymerisation von cyclischen Ethern, insbesondere Epoxiden wie Propylenoxid.

7. Verwendung gemäß einem der Ansprüche 1 bis 5 für die Polymerisation oder Copolymerisation von cyclischen Estern, insbesondere polymeren cyclischen Estern von Milchsäure und/oder Glykolsäure.

8. Verfahren zur Herstellung von Block- oder Random-Copolymeren oder Polymeren, umfassend Inkontaktbringen eines Monomers oder mehrerer Monomere, ausgewählt aus Epoxiden und cyclischen Estern, eines Polymerisationskatalysators und gegebenenfalls eines Polymerisationslösungsmittels bei einer Temperatur zwischen Umgebungstemperatur und 250°C während einer Zeitdauer zwischen einigen Minuten und 300 Stunden, wobei das Verfahren **dadurch gekennzeichnet ist, daß** der Ketteninitiator und der Polymerisationskatalysator durch dieselbe Verbindung der allgemeinen Formel (1), wie sie in einem der Ansprüche 1 bis 5 definiert ist, dargestellt werden.

9. Verfahren gemäß Anspruch 8, **dadurch gekennzeichnet, daß** das Epoxid Propylenoxid ist und die cyclischen Ester polymere cyclische Ester von Milchsäure und/oder Glykolsäure sind.
